# EUROPÄISCHE PATENTSCHRIFT

(11) **EP 0 551 268 B1**
(45) Veröffentlichungstag und Bekanntmachung des Hinweises auf die Patenterteilung: **22.06.1994**
(21) Anmeldenummer: 91907401.3
(22) Anmeldetag: 11.04.1991
(51) Int. Cl.: B62K 21/12

(54) **LENKVORRICHTUNG FÜR EIN SPORTFAHRRAD**
STEERING DEVICE FOR A SPORTS BICYCLE
DISPOSITIF DE DIRECTION POUR BICYCLETTE DE SPORT

(30) Priorität: 12.04.1990 DE 9004258 U
(43) Veröffentlichungstag der Anmeldung: 21.07.1993
(73) Patentinhaber: badgematic Vertrieb von Werbeträgern Gesellschaft mit beschränkter Haftung, D-44894 Bochum (DE)
(72) Erfinder: DE KOCK, A.P.A.G., NL-3648 CE Wilnis (NL)
(74) Vertreter: Behrendt, Arne, Dipl.-Ing.
(86) Internationale Anmeldenummer: EP9100686
(87) Internationale Veröffentlichungsnummer: WO9116231

(56) Entgegenhaltungen:
- DE-U- 8 914 961
- DE-U- 9 000 946
- US-A- 4 873 886

## Beschreibung

Die Erfindung betrifft eine Lenkvorrichtung für ein Sportfahrrad, mit an der Lenkstange befestigten, in Fahrtrichtung nach vorne vorstehenden Griffelementen und ebenfalls an der Lenkstange befestigten Unterarmstützen, die mittels Befestigungsvorrichtungen an der Lenkstange befestigt sind.

Derartige nach dem Stand der Technik (US-A-48 73 886) bekannte Lenkvorrichtungen werden vorwiegend im Triathlonsport eingesetzt. Diese Lenkvorrichtung ermöglicht, daß der Fahrer insbesondere auf ebenen Langstreckenbereichen eine entspannte Körperhaltung einnehmen kann. Die Lage der Unterarme auf den Unterarmstützen und die dadurch erreichte gebückte Haltung des Oberkörpers verleihen dem Fahrer eine aerodynamisch günstige Fahrhaltung auf dem Fahrrad.

Bei den bekannten Lenkvorrichtungen der genannten Art sind die Unterarmstützen nur begrenzt verstellbar. So kann beispielsweise die Position der Unterarmstützen auf der Lenkstange nur in der Breite variiert werden. Dabei folgen die Unterarmstützen zwangsläufig dem Verlauf der Lenkstange, so daß eine individuelle Anpassung an die Körpermaße des Fahrers nicht möglich ist.

Es ist Aufgabe der Erfindung, die Lenkvorrichtung der eingangs genannten Art dahingehend weiterzubilden, daß die Position der Unterarmstüzen besser an die individuellen Körpermaße des Fahrers anpaßbar ist.

Zur Lösung dieser Aufgabe schlägt die Erfindung ausgehend von der Lenkvorrichtung der eingangs genannten Art vor, daß die Unterarmstützen in Bezug auf die Befestigungsvorrichtungen verstellbar sind.

Aufgrund der zusätzlichen Verstellmöglichkeiten der Unterarmstützen kann der Fahrer die für ihn günstigsten Auflagerungspunkte im Unterarmbereich an der Lenkvorrichtung einstellen.

Eine erste Ausführungsform der Erfindung sieht vor, daß die Befestigungsvorrichtung der Unterarmstützen jeweils eine Lochleiste mit in Fahrtrichtung hintereinander angeordneten Löchern aufweist, an denen die Unterarmstützen mittels in die Löcher eingreifende Schrauben in unterschiedliche Positionen festlegbar sind. Hierdurch ergibt sich eine besonders einfache und robuste Verstellmöglichkeit der Unterarmstütze in bezug auf die Lenkstange in Fahrtrichtung. Die Lochleiste bietet für die Unterarmstütze eine hinreichende Auflagefläche, die in jeder Stellung ein stabiles Auflager für die Schraubenbefestigung bietet.

Eine zweckmäßge Weiterbildung der oben erwähnten Ausführungsform der Erfindung sieht vor, daß zwischen den Lochleisten und den Unterarmstützen zusätzlich Lochleistenblöcke angeordnet sind, die mit in Fahrtrichtung hintereinander angeordneten Löchern versehen sind und mittels in die Löcher eingreifender Schrauben in unterschiedlichen Positionen an der Lenkstange bzw. aneinander festlegbar sind. Die Anordnung der zusätzlichen Lochleistenblöcke ermöglicht es, zusätzlich die Höhenlage der Unterarmstütze in bezug auf die Lenkstange zu verändern. Der zusätzliche Lochleistenblock läßt sich gegenüber der Lochleiste in Längsrichtung verschieben und mittels Schrauben in verschiedenen Stellungen an der Lochleiste festlegen. Die Auflagefläche des Lochleistenblocks ist so ausgestaltet, daß sie eine hinreichende Auflagefläche für die Unterarmstütze bietet. Weiterhin kann die Unterarmstütze auf dem Lochleistenblock in gleicher Weise wie auf der Lochleiste in Fahrtrichtung längs verschoben und mittels Schrauben festgelegt werden. Aufgrund des zwischengefügten, zusätzlichen Lochleistenblockes wird die Längsverstellbarkeit der Unterarmstützen in Bezug auf die Befestigung erheblich erweitert.

Eine andere Weiterbildung der oben erwähnten Ausführungsform der Erfindung sieht vor, daß die Befestigungsvorrichtungen der Unterarmstützen jeweils ein um eine vertikale Drehachse verschwenkbares, feststellbares Drehgelenk aufweisen. Das Drehgelenk ermöglicht eine dritte Verstellmöglichkeit, nämlich die Verstellung der Winkelstellung der Unterarmstützen in Bezug auf die Griffelemente, so daß die Unterarmbereiche eine der Anatomie des Fahrers angepaßte Winkelstellung einnehmen können.

Vorteilhaft ist es, die Befestigungsvorrichtungen der Griffelemente einerseits und der Unterarmstützen andererseits miteinander zu verbinden. Hierdurch ergibt sich eine günstige Kompaktbauweise mit maximal zwei Befestigungsvorrichtungen an der Lenkerstange.

Eine andere vorteilhafte Ausführungsform der Erfindung sieht vor, daß Jede Unterarmstütze in bezug auf ihre Befestigung an der Lenkstange sowohl in der Fahrtrichtung als auch quer zur Fahrtrichtung verschiebbar und in unterschiedlichen Positionen feststellbar ist und um eine senkrecht verlaufende Achse verdrehbar und in unterschiedlichen Drehstellungen verstellbar ist. Diese Ausführungsform der Erfindung verwendet zweckmäßig zwischen jeder Befestigungsvorrichtung und der zugehörigen Unterarmstütze ein Zwischenstück, welches in Fahrtrichtung verschiebbar und in beliebigen Verschiebestellungen feststellbar gelagert ist und mit einer quer zur Fahrtrichtung verlaufenden Führung versehen ist, an der ein quer zur Fahrtrichtung verschiebbares und in beliebigen Verschiebestellungen festlegbares Drehlager mit vertikaler Drehachse gelagert ist, welches seinerseits verdrehbar und in beliebigen Drehstellungen festlegbar die zugehörige Armstütze trägt.

Ausführungsbeispiele der Zusatzlenkvorrichtung gemäß der Erfindung werden im folgenden anhand der Zeichnung näher erläutert. Es zeigen:
- Fig. 1: Eine perspektivische Darstellung der Lenkvorrichtung mit einer Explosionsdarstellung einer Unterarmstütze.
- Fig. 2: Eine perspektivische Explosionsdarstellung einer separat ausgebildeten Unterarmstütze der erfindungsgemäßen Lenkvorrichtung;
- Fig. 3: In gleicher Darstellung wie Fig. 1 eine andere Ausführungsform der Lenkvorrichtung.

In der Zeichnung ist die Lenkvorrichtung in ihrer Gesamtheit mit dem Bezugszeichen 1 bezeichnet. Die Lenkvorrichtung 1 weist ein U-förmig gebogenes Griffelement 2 auf, das an seinen freien Schenkeln 3, 4 mit Befestigungsvorrichtungen 5, 6 versehen ist.

Um eine optimale Stellung der Handflächen gegenüber den Unterarmbereichen zu erreichen, ist das Griffelement 2 im Bogenbereich 7 gegenüber den freien Schenkelabschnitten unter einem Winkel von 35° aufwärts gebogen.

Mit den Befestigungsvorrichtungen 5, 6 wird die Lenkvorrichtung 1 an einer in der Zeichnung nicht dargestellten Lenkstange eines Sportrades befestigt. Jeweils an ihrer Oberseite weisen die Befestigungsvorrichtungen 5, 6 eine Lochleiste 8 mit in Fahrtrichtung hintereinander angeordneten Löchern 9 auf, an der eine Unterarmstütze 10 mittels einer Schraube 11 in unterschiedlichen Längspositionen festlegbar ist. Zur Herstellung einer hohen Fluchtungsgenauigkeit in Längsrichtung zwischen in den Unterarmstützen 10 angeordneten Öffnungen 12 und den Löchern 9 der Lochleiste 8 wird die Unterarmstütze 10 in einer Rinne 13 geführt. Um eine Höhenverstellung der Unterarmstütze 10 zu erreichen, kann auf die Lochleiste 8 ein Lochleistenblock 14 aufgesetzt werden. Der Lochleistenblock 14 ist ebenfalls mit in Fahrtrichtung hintereinander angeordneten Löchern 15 versehen, in die Schrauben 16 zur Festlegung des Lochleistenblocks 14 an der Lochleiste 8 eingreifen. Bei der Verwendung von mehreren Lochleistenblöcken 14 übereinander werden die Lochleistenblöcke 14 ebenfalls mit Schrauben 16 aneinander verspannt. Die Unterseite des Lochleistenblocks 14 ist derart ausgestaltet, daß sie in die Rinne 13 der Lochleiste 8 oder in eine angeformte Rinne 17 eines Lochleistenblockes 14 zur Herstellung der Fluchtungsgenauigkeit in Längsrichtung eingreift und geführt wird.

Auf die als Schalen ausgebildeten Unterarmstützen 10 können zur bequemen Abstützung der Unterarme Schaumstoffauflagen 22 aufgeklebt werden. Die Befestigungsvorrichtungen 5, 6 weisen jeweils an ihrer Unterseite halbkreisförmige Aussparungen 18, 19 auf, in die das Lenkstangenrohr eingreift. Zur Verspannung des Lenkstangenrohres in den Aussparungen 18, 19 dienen Bügelklemmen 20, 21, die mittels Schrauben 23 anklemmbar sind.

An den Befestigungsvorrichtungen 5, 6 sind Rohrenden 24, 25 angeformt, die stirnseitig in die Rohröffnungen der freien Schenkel 3, 4 des Griffelementes 2 eingreifen und durch eine Preßpassung darin befestigt sind.

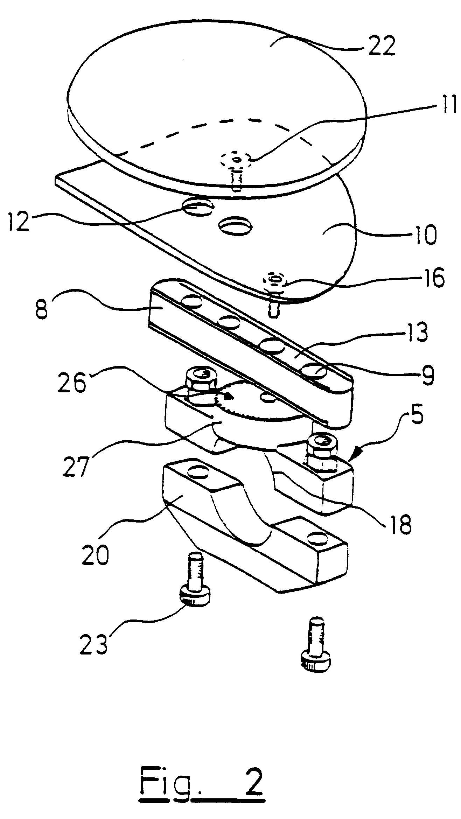

Die in der Fig. 2 dargestellte Ausführungsform zeigt eine Unterarmstütze 10 mit einer separat angeordneten Befestigungsvorrichtung 5, die mit einem um eine vertikale Drehachse verschwenkbaren, feststellbaren Drehgelenk 26 versehen ist. Das Drehgelenk 26 ist als Rastscheibe 27 ausgebildet, auf deren Fläche die Lochleiste 8 aufliegt und mittels einer nicht dargestellten Schraube verspannt wird.

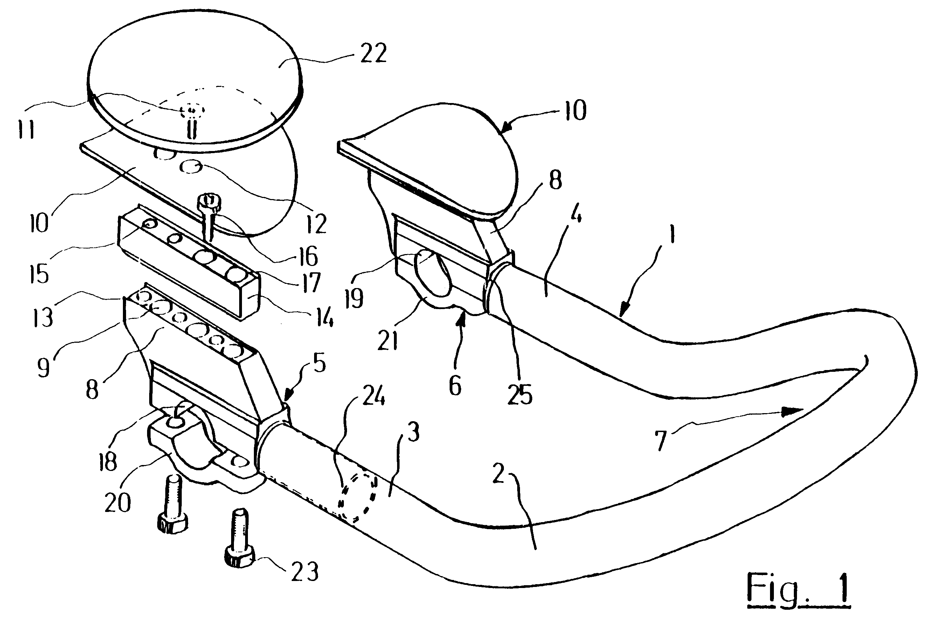

Zur Höhenverstellung kann wie bei der ersten Ausführungsform nach Fig. 1 zwischen der Lochleiste 8 und der Unterarmstütze 10 ein Lochleistenblock 14 eingefügt werden.

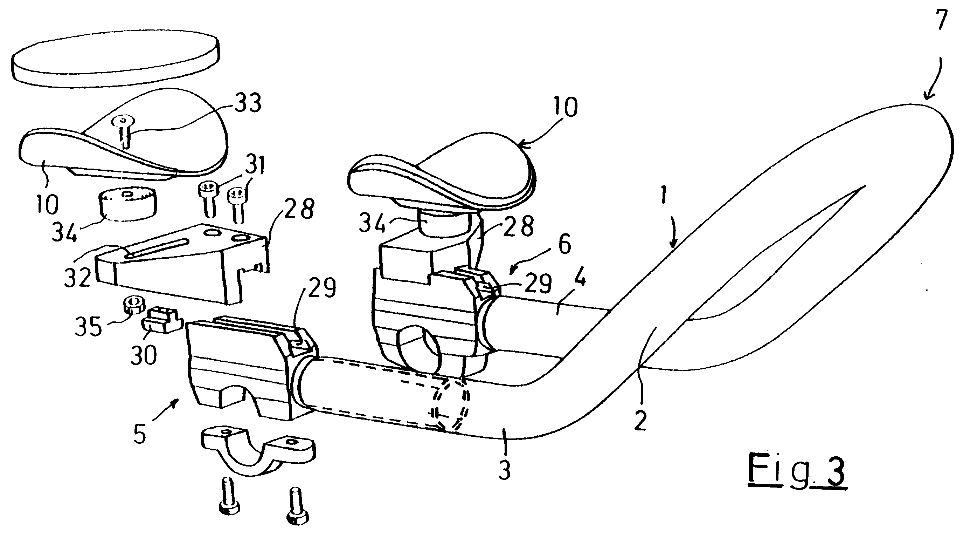

Beim Ausführungsbeispiel der Fig. 3 ist zwischen den Befestigungsvorrichtungen 5 bzw. 6 und den Unterarmstützen 10 jeweils ein Zwischenstück 28 angeordnet. Dieses Zwischenstück 28 ist in einer sich in Fahrtrichtung erstreckenden Lagernute 29 der Befestigungsvorrichtung 5 bzw. 6 in Fahrtrichtung verschiebbar gelagert und kann mittels eines in die Lagernute 29 eingreifenden Klemmblockes 30 und zweier Klemmschrauben 31 in beliebigen Verschiebestellungen in der Lagernute 29 fixiert werden.

Weiterhin weist das Zwischenstück 28 eine quer zur Fahrtrichtung verlaufende Langloch-Führung 32 auf, in welcher ein Drehlager quer zur Fahrtrichtung verschiebbar und in beliebigen Verschiebestellungen festlegbar ist. Dieses Drehlager besteht aus einem als Drehachse dienenden vertikalen Schraubenbolzen 33 und einer Rastscheibe 34, welche zwischen dem Zwischenstück und der Unterarmstütze 10 angeordnet ist. Der als Drehachse des Drehlagers dienende Schraubenbolzen 33 durchdringt die Unterarmstütze 10, die Rastscheibe 34 und die Langloch-Führung 32. Auf das untere Ende des Schraubenbolzens 33 ist eine Schraubenmutter 35 aufschraubbar, die die vom Schraubenbolzen 33 durchdrungenen Teile gegeneinander verspannt und festlegt. Durch Festziehen der Schraubenmutter 35 kann also sowohl die Verschiebestellung des Drehlagers in der Langloch-Führung 32 als auch die Drehstellung der Unterarmstutze 10 festgelegt werden.

## Patentansprüche

1. Lenkvorrichtung für ein Sportfahrrad, mit an der Lenkstange befestigten, in Fahrtrichtung nach vorne vorstehenden Griffelementen (2), und ebenfalls an der Lenkstange befestigten Unterarmstützen (10), die mittels Befestigungsvorrichtungen (5, 6) an der Lenkstange befestigt sind, **dadurch** **gekennzeichnet**, daß die Unterarmstützen (10) in Bezug auf die Befestigungsvorrichtungen (5, 6) verstellbar sind.

2. Lenkvorrichtung nach Anspruch 1, dadurch gekennzeichnet, daß die Befestigungsvorrichtungen (5, 6) der Unterarmstützen (10) jeweils eine Lochleiste (8) mit in Fahrtrichtung hintereinander angeordneten Löchern (9) aufweist, an denen die Unterarmstützen (10) mittels in die Löcher (9) eingreifender Schrauben (11) in unterschiedlichen Positionen festlegbar sind.

3. Lenkvorrichtung nach den Ansprüchen 1 und 2, dadurch gekennzeichnet, daß zwischen den Lochleisten (8) und den Unterarmstützen (10) zusätzlich Lochleistenblöcke (14) angeordnet sind, die mit in Fahrtrichtung hintereinander angeordnetern Löchern (15) versehen sind und mittels in die Löcher (15) eingreifende Schrauben (16) in unterschiedlichen Positionen an der Lochleiste (8) bzw. aneinander festlegbar sind.

4. Lenkvorrichtung nach einem der Ansprüche 1 bis 3, dadurch gekennzeichnet, daß die Befestigungsvorrichtungen (5, 6) der Unterarmstützen (10) jeweils ein um eine vertikale Drehachse verschwenkbares feststellbares Drehgelenk (26) aufweisen.

5. Lenkvorrichtung nach den Ansprüchen 1 bis 4, dadurch gekennzeichnet, daß die Befestigungsvorrichtungen (5, 6) der Griffelemente (2) einerseits und der Unterarmstützen (10) andererseits jeweils miteinander verbunden sind.

6. Lenkvorrichtung nach Anspruch 5, dadurch gekennzeichnet, daß die Griffelemente (2) aus einem nach vorne abgerundeten, U-förmigen Bügel bestehen, der in seinem Bogenbereich (7) gegenüber seinen Schenkelabschnitten (3, 4) mit einem Winkel von insbesondere 35° nach oben abgebogen ist.

7. Lenkvorrichtung nach Anspruch 1, dadurch gekennzeichnet, daß jede Unterarmstütze (10) in Bezug auf ihre Befestigungsvorrichtung (5, 6) an der Lenkstange sowohl in Fahrtrichtung als auch quer zur Fahrtrichtung verschiebbar und in unterschiedlichen Positionen feststellbar ist und um eine senkrecht verlaufende Achse verdrehbar und in unterschiedlichen Drehstellungen feststellbar ist.

8. Lenkvorrichtung nach Anspruch 7, dadurch gekennzeichnet, daß zwischen jeder Befestigungsvorrichtung (5, 6) und der zugehörigen Unterarmstütze (10) ein Zwischenstück (28) angeordnet ist, das in Fahrtrichtung verschiebbar und in beliebigen Verschiebestellungen festlegbar an der zugehörigen Befestigungsvorrichtung (5, 6) gelagert ist und mit einer quer zur Fahrtrichtung verlaufenden Führung (32) versehen ist, and der ein quer zur Fahrtrichtung verschiebbares un in beliebigen Verschiebestellungen festlegbares Drehlager (33, 34) mit vertikaler Drehachse (33) gelagert ist, welches seinerseits verdrehbar und in beliebigen Drehstellungen festlegbar die zugehörige Armstütze (10) trägt.

## Claims

1. A steering device for a sports bicycle, comprising grip elements (2) which are fixed to the handlebars and which project forwardly in the direction of travel and forearm supports (10) which are also fixed to the handlebars and which are fixed to the handlebars by means of fixing device (5, 6), characterised in that the forearm supports (10) are adjustable in relation to the fixing devices (5, 6).

2. A steering device according to claim 1 characterised in that the fixing devices (5, 6) of the forearm supports (10) each have an apertured bar (8) with holes (9) which are arranged one behind the other in the direction of travel and to which the forearm supports (10) can be secured in different positions by means of screws (11) which engage into the holes (9).

3. A steering device according to claims 1 and 2 characterised in that additionally disposed between the apertured bars (8) and the forearm supports (10) are apertured bar blocks (14) which are provided with holes (15) arranged one behind the other in the direction of travel and can be secured in different positions to the apertured bar (8) or to each other by means of screws (16) which engage into the holes (15).

4. A steering device according to one of claims 1 to 3 characterised in that the fixing devices (5, 6) of the forearm supports (10) each have a pivotal connection (26) which is pivotable about a vertical pivot axis and lockable.

5. A steering device according to claims 1 to 4 characterised in that the fixing devices (5, 6) of the grip elements (2) on the one hand and the forearm supports (10) on the other hand are respectively connected together.

6. A steering device according to claim 5 characterised in that the grip elements (2) comprise a forwardly rounded U-shaped loop member which in its arcuate region (7) is bent upwardly relative to its limb portions (3, 4) at an angle of in particular 35°.

7. A steering device according to claim 1 characterised in that each forearm support (10) is displaceable in relation to its fixing device (5, 6) on the handlebars both in the direction of travel and also transversely to the direction of travel and can be locked in different positions and is rotatable about a vertically extending axis and can be locked in different rotational positions.

8. A steering device according to claim 7 characterised in that disposed between each fixing device (5, 6) and the associated forearm support (10) is an intermediate portion (28) which is mounted on the associated fixing device (5, 6) displaceably in the direction of travel and lockably in any displacement positions and is provided with a guide (32) which extends transversely to the direction of travel and on which a rotary mounting (33, 34) with a vertical axis of rotation (33) is mounted, which rotary mounting is displaceable transversely to the direction of travel and can be fixed in any displacement positions and in turn carries the associated arm support (10) rotatably and lockably in any rotational positions.

## Revendications

1. Dispositif de guidage pour une bicyclette de sport, avec des éléments de préhension (2) fixés au guidon, faisant saillie vers l'avant dans la direction de déplacement, et des supports d'avant-bras (10) fixés également au guidon qui sont fixés au moyen de dispositifs de fixation (5, 6) au guidon, caractérisé en ce que les supports d'avant-bras (10) sont réglables relativement aux dispositifs de fixation (5, 6).

2. Dispositif de guidage selon la revendication 1, caractérisé en ce que les dispositifs de fixation (5, 6) des supports d'avant-bras (10) présentent respectivement, une barre perforée (8) avec des trous (9) disposés les uns derrière les autres dans la direction de déplacement, dans lesquels les supports d'avant-bras (10) peuvent être fixés au moyen de boulons (11) s'engageant dans les trous (9) dans des positions différentes.

3. Dispositif de guidage selon les revendications 1 et 2, caractérisé en ce que sont disposés entre les barres perforées (8) et les supports d'avant-bras (10) des blocs de barres perforées additionnels (14), pourvus de trous (15) disposés les uns derrière les autres dans la direction de déplacement et qui peuvent être fixés au moyen de boulons (16) s'engageant dans les trous (15) dans des positions différentes à la barre perforée (8) ou les uns aux autres.

4. Dispositif de guidage selon l'une des revendications 1 à 3, caractérisé en ce que les dispositifs de fixation (5, 6) des supports d'avant-bras (10) présentent chacun une articulation à charnière (26) pivotant autour d'un axe de pivotement vertical et pouvant être bloquée.

5. Dispositif de guidage selon les revendications 1 à 4, caractérisé en ce que les dispositifs de fixation (5, 6) des éléments de préhension (2) d'une part et des supports d'avant-bras (10) d'autre part sont respectivement reliés les uns aux autres.

6. Dispositif de guidage selon la revendication 5, caractérisé en ce que les éléments de préhension (2) sont constitués d'un étrier en forme de U, arrondi vers l'avant et qui, dans sa zone courbée (7) est replié vers le haut par rapport à ses tronçons de branche (3, 4) suivant un angle notamment de 35°.

7. Dispositif de guidage selon la revendication 1, caractérisé en ce que chaque support d'avant-bras (10) est déplaçable relativement à son dispositif de fixation (5, 6) au guidon aussi bien dans la direction de déplacement que transversalement à la direction de déplacement et peut être fixé dans différentes positions et peut tourner autour d'un axe s'étendant perpendiculairement et peut être fixé dans des positions de rotation différentes.

8. Dispositif de guidage selon la revendication 7, caractérisé en ce qu'il est disposé entre chaque dispositif de fixation (5, 6) et le support d'avant-bras associé (10) une pièce intermédiaire (28) qui est déplaçable dans la direction de déplacement et qui est logée, tout en pouvant être immobilisée dans les positions de déplacement au choix, au dispositif de fixation associé (5, 6) et qui est pourvu d'un guidage (32) s'étendant transversalement à la direction de déplacement auquel est logé un coussinet de pivotement (33, 34), déplaçable transversalement à la direction de déplacement et pouvant être fixé dans des positions de déplacement au choix, avec un axe de rotation verticale (33), qui supporte de son côté l'avant-bras associé (10) qui peut tourner et qui peut être fixé dans des positions de rotation au choix.
